# EUROPEAN PATENT SPECIFICATION

(11) **EP 1 963 086 B1**
(45) Date of publication and mention of the grant of the patent: **08.09.2010**
(21) Application number: 06849499.6
(22) Date of filing: 21.12.2006
(51) Int. Cl.: B29D 11/00

(54) **METHOD OF COATING AN OPHTHALMIC LENS USING STAMP COATING**
VERFAHREN ZUR BESCHICHTUNG EINER OPHTHALMISCHEN LINSE MITTELS STEMPELBESCHICHTUNG
PROCÉDÉ DE REVÊTEMENT D'UNE LENTILLE OPHTALMIQUE PAR REVÊTEMENT PAR ESTAMPAGE

(30) Priority: 21.12.2005 US 314022
(43) Date of publication of application: 03.09.2008
(73) Proprietor: ESSILOR INTERNATIONAL (Compagnie Générale d'Optique), 94220 Charenton le Pont (FR)
(72) Inventor: CHEN, Xu, ST-PETERSBURG, FL 33709 (US); YANG, Hsinjin, ST-PETERSBURG, FL 33709 (US)
(74) Representative: Lepelletier-Beaufond, François
(86) International application number: PCT/IB2006/004157
(87) International publication number: WO 2007/099404

(56) References cited:
- US-A1- 2003 152 693
- US-B1- 6 196 683

## Description

### BACKGROUND OF THE INVENTION

### 1. Field of the Invention

The invention relates to applying a coating with a stamp to an insert of an injection molding machine and then injecting resin to form a coated ophthalmic lens.

### 2. The Prior Art

In-situ coating via direct injection, so called in-mold coating was originally developed to improve the surface appearance of sheet molding compound (SMC) part molded by compression molding. In more recent years it's been applied to injection molded thermoplastic parts.

For the regular injection molding process, the thermoplastic piece is ejected out of the mold once it is rigid enough to resist the deformation caused by ejection. For in-situ coating injection, it integrates with injection molding via injecting thermoset coating liquid on the exterior surface of the thermoplastic piece when the thermoplastic piece is solidified to the degree that it won't be damaged by the coating injection. More coating is injected after the desired surface coverage is obtained to achieve certain coating thickness. The coating thermally cures by the residual heat from the thermoplastic piece and the continuously heated mold.

U.S. Patent 5,943,957 discloses a method for pad printing inked images onto injection-molded pieces while they are still in the mold. The patented method relates to conventional ink that air dries, and does not involve an optical grade coating that will be spread over the lens by re-clamping the mold inserts and allowing the coating to cure via the retained heat in the mold block.

US 2003/0152693 A1 discloses a stamp coating method of applying a coating to an optical surface including the lens surface and the mold surface for lens casting. This method is based on a technology where a balloon made of deformable material is used to pick up a certain amount of coating from a container, a so-called cliché. The deformable balloon with coating on it then stamps the surface of the lens so that the coating is transferred from the balloon surface to the lens surface. The coated lenses are then UV cured. In yet another aspect, a method for applying a coating to at least one optical surface of a mold is disclosed in US 2003/0152693. The method includes the steps of placing a coating solution in a cliche of a cliche plate, transferring the coating solution from the cliche to a transfer pad, pressing the transfer pad to a facing inside surface of a mold so as to transfer the coating solution from the transfer pad to the facing inside surface, irradiating the coating solution so as to form a coating layer on the facing inside surface, positioning the front mold and the back mold whose facing inside surfaces are a negative image of the surfaces of an optical lens to be formed at a proper distance and rotational orientation relative to each other, closing the front mold and back mold with a closure member to define a molding cavity, injecting a fluid lens-forming material into the molding cavity, and curing the fluid lens-forming material so that the fluid lens-forming material is hardened to form the optical lens and the coating layer on the inside surface of the mold is transferred to and hardened to be bond on a corresponding surface of the optical lens. However, lens stamp coating has not been successfully applied to injection molding in order to deliver in-situ coated ophthalmic lenses. Accordingly, it would be desirable to provide a suitable coating composition and method for applying an in-mold coating to injection molded thermoplastic lenses.

### SUMMARY OF THE INVENTION

In-situ coating integrated with injection molding is the way to in-situ coat an injection molded thermoplastic lens, e.g. polycarbonate lens when it is still inside the mold. The coating can be applied to the mold insert via stamp prior to the lens molding. In this case, the coating will be transferred to the lens surface later on.

It is therefore an object of the present invention to provide a method to manufacture an in-situ coated thermoplastic lens

Then it is an object of the present invention to disclose an in-mold coating method to manufacture a coated thermoplastic lens wherein the coating is applied to the hot insert metal surface prior to the high shear, high temperature thermoplastic melt injection.

It is an object of the invention to provide an in-mold coating system that results in a coating of optical quality.

It is a further object of the present invention to modify an injection molding cycle to incorporate a coating stage therein.

It is yet another object of the present invention to provide a coating composition which is stable and liquid at room temperature, and which will quickly cure at a mold insert temperature.

It is a further object of the present invention to provide a flexible technique to stamp the coating onto the mold insert.

More particularly the optical coating is first applied to the heated mold insert via stamping. Stamping is conducted using a deformable pad of which the material has good wetability to pick up the coating from a cliché and is of certain temperature resistance at the thermoplastic lenses molding temperature. The pad is then pressed against the hot metal insert for 2 minutes to let the coating thermally precure. So when the pad is retracted, a thin layer of coating is formed onto the insert optical surface and no residual coating will be taken away by the pad. The mold is then closed and the thermoplastic melt is injected. The coating layer is further cured by the heat from the hot melt and transferred to the lens surface when the lens is ejected out of the mold..

In a general summary of the various methods covered by the invention, there is provided a method to manufacture an in-mold coated ophthalmic lens by pre-treating a heated mold insert of an open injection molding machine. A cliché is provided with a circular etched recess that contains a heat-activated thermoset acrylic-based coating solution. A silicone membrane is dipped into the recess to contact the coating solution. The liquid coating is transported via the silicone membrane to a heated mold insert and the membrane is then pressed on the insert until the coating is pre-cured. The silicone membrane is removed and the mold is closed. A thermoplastic resin is injected into the closed mold. Once the lens solidifies, the mold is opened and an in-mold coated ophthalmic lens is ejected.

The recess is etched to a depth between 10µm to 50µm. The diameter of the circular recess is dimensioned to dispense sufficient coating to completely cover a curved insert surface. The cliché contains between 0.2 ml and 0.5 ml of coating solution. The silicone membrane is an inflatable bladder inflated to a pressure between 0.34 bar to 1.38 bar (5 psi to 20 psi). The pressure of the bladder on the insert is maintained from a time between 1.5 minutes and 5 minutes. The thermoplastic substrate is selected from the group consisting of polymethyl(meth)acrylate, polycarbonate, polycarbonate/polyester blends, polyamide, polyester, cyclic olefin copolymers and polyurethane, polysulfone, polystyrene, polypentane and combinations thereof. The thermoplastic may be a polycarbonate derivative.

The liquid coating comprises at least a mixture of one or more (meth)acrylate compounds, an initiator, and a metal salt. The liquid coating comprises at least a mixture of at least one hexafunctional acrylate compound, at least one difunctional acrylate compound, and at least one monofunctional acrylate compound. The initiator is selected from alkyl aralkyl peracide compounds. The metal salt is cobalt naphthenate. The invention also covers a coated thermoplastic ophthalmic lens manufactured according to the method.

In one embodiment of the invention a cliché is provided on a horizontal surface of a lower mold half at the beginning of the cycle when the movable mold half is opened vertically. The membrane, the cliché and the mold insert all have center points, and wherein the three center points are aligned along a common vertical axis during said dipping step, and wherein said transporting step comprises transporting the membrane so that its center point remains on the vertical axis, The cliché contains between 0.1 ml and 0.8 ml of liquid coating solution.

In an alternate embodiment, the cliché is horizontally-oriented adjacent one mold half at the beginning of the cycle when the movable mold half is opened. The membrane, the cliché and the mold insert all have center points, and wherein the three center points are aligned along a common vertical plane during said dipping step, and wherein said transporting step comprises transporting the membrane so that its center point remains on the vertical plane.

### BRIEF DESCRIPTION OF THE DRAWINGS

The advantages, nature, and various additional features of the invention will appear more fully upon consideration of the illustrative embodiments now to be described in detail in connection with accompanying drawings. In the drawings wherein like reference numerals denote similar components throughout the views:
FIG. 1 is a flowchart setting forth the steps for in-mold coating according to a first embodiment of the invention.
FIG. 2 is a schematic drawing illustrating how the coating is applied to the mold inserts.
FIG. 3 is a flowchart setting forth the steps for in-mold coating according to a second embodiment of the invention.
FIGS. 4A, 4B and 4C are a series of schematic drawings illustrating how the coating is applied to the mold insert.
FIG. 5 is another schematic drawing showing coating application to a vertically oriented mold insert.

### DETAILED DESCRIPTION OF THE PREFERRED EMBODIMENTS

The methods described herein provide an in-mold coated ophthalmic lens. An acrylic based coating solution is provided that is stable and liquid at room temperature. The coating may be applied to the insert as an unpressurized drop and then spread across the insert by an inflatable bladder. Alternatively, the bladder can apply the coating already spread out in a cliché. In either case the bladder pauses while the coating is being pressed against the heated insert to allow the coating to pre-cure. The bladder is next withdrawn. Once the coating is able to resist deformation from the injection flow, the resin is introduced into the cavity. The resin solidifies at the same time as the coating fully cures. An in-mold coated lens is then ejected from the injection molding machine.

The drop coating embodiment can be summarized in the following steps:
1. depositing coating liquid on the heated metal inserts on the lower mold half.
2. An air-inflated silicone membrane of which the air pressure can be regulated is pneumatically driven to press the coating against the metal insert and spread the coating out to cover the whole insert surface.
3. The pressure that drives the silicone membrane movement and the pressure inflates the silicone membrane were held for 2 to 3 minutes once the coating is spread out for the coating to partially cure. So once the pressure released and silicone membrane retracted, a pre-cured thin layer of coating is formed on the hot metal insert and there is no coating residual on the silicone membrane.
4. Close the mold and actuate the lens injection molding cycle
5. Eject the coated lens

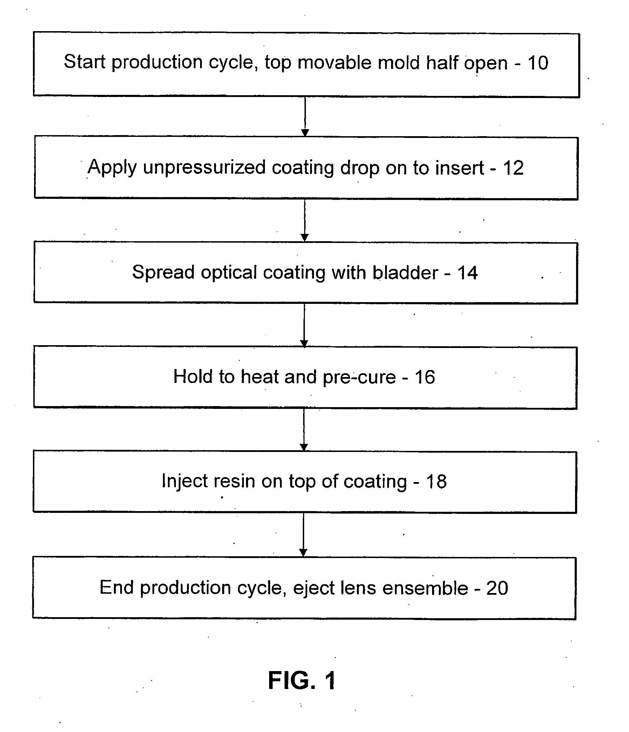

A more specific description will be provided with reference to the flowchart of FIG. 1. A conventional injection molding cycle is modified by adding steps relating to the introduction of the optical coating prior to resin injection.

In step 10, the cycle begins with the top movable mold half opened vertically. As will be discussed in greater detail below, the mold inserts are heated to about 121.1°C (250 degrees F), which is below a resin solidification temperature and represented by T. In step 12, a drop of acrylate based coating solution is deposited onto the lower concave insert. The coating is applied as an unpressurized coating drop from a coating dispenser. For example, the full metered charge of coating, sufficient to cover the entire surface of the optical coating carrier at the desired thickness, is applied as one drop.

Directly thereafter, within 2- 10 seconds, an inflatable bladder is placed on to the coating drop, in step 14. The bladder is heat resistant and configured and dimensioned with a smooth exterior to press evenly against the entire insert surface. The outer surface of the bladder must be uniformly smooth at the intended inflation level, thereby spreading the coating into a uniformly thin layer. The bladder may be pre-inflated or its base may be brought into position and then inflated, on top of the coating drop. In step 16, the coating begins a pre-cure phase. Pre-cure continues until the bladder can be withdrawn without disturbing the thin coating layer.

In step 18, the molten resin is injected into the cavity via an edge gate. The coating must be sufficiently pre-cured so that it can maintain its shape during injection. If the resin is under-cured it can be flushed away from the gate. The edge gate may be modified to insure the resin in injected in a manner to minimize disturbing the coating. Also it is imperative that the resin should not be injected underneath the coating. The resin is injected at very high pressure, in the order of thousands of pounds per square inch, thus having the effect of compressing downward on to the coating. As a result, the coating becomes intimately bonded to the resin as it sets into a final cured state. If the coating is over-cured, it will be hazy or may fail to adhere to the solidifying lens. The molten resin may enter the cavity at above 260°C (500 degrees F).

In step 20, the resin begins to cool to the mold solidification temperature T. During this phase, a packing pressure may be utilized for a span of time. Once the lens is sufficiently rigid to resist deformation, the mold is opened and the in-mold coated lens is ejected.

Before contacting the coating drop with the bladder, it is possible to introduce an ophthalmic wafer, carrier or film onto the coating itself. Photochromic carriers, wafer or films are well suited for use in the inventive process. Polarized wafers, carriers or films are also well suited because they tend to be very delicate, and the invention affords a high degree of scratch protection by sandwiching the polarized film in between a protective coating and a thermoplastic lens. The wafers may be on the order of 0.5mm to 1.5mm thick. After the coating cures it remains as a uniformly thin thermoset layer across the entire convex surface of the wafer.

### Industrial Manufacturing Installation

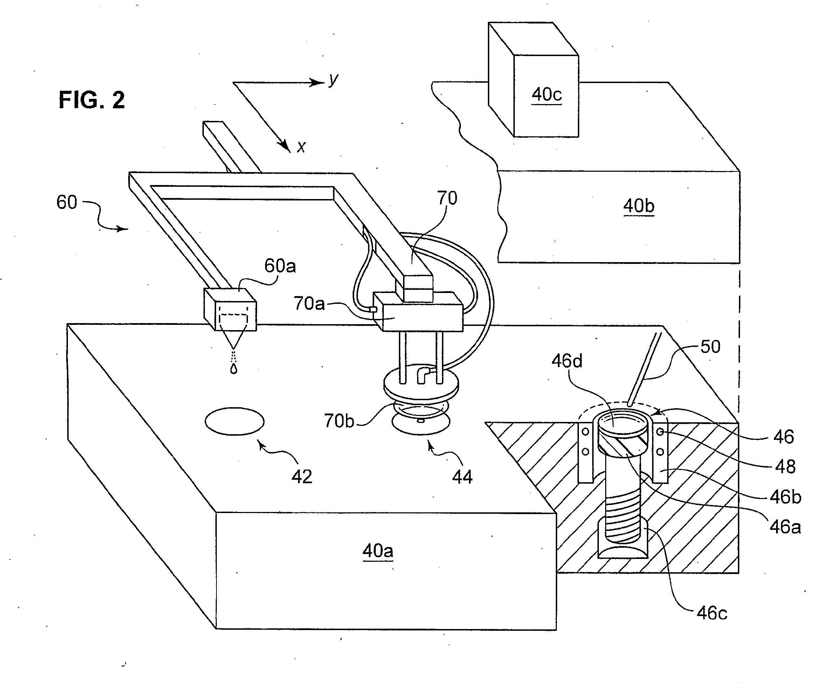

FIG. 2 is a schematic diagram laid out in a manner to illustrate various steps according to the invention. As can be seen, we orient the fixed or stationary mold half 40a on the bottom, with the movable mold half 40b on top, and capable of vertical clamping motion via an electric or hydraulic clamping unit 40c. Clamping unit 40c can provide 100 tons or more clamping force as is typical in optical lens molding.

Bottom mold half 40a, includes an exemplary three mold cavities, although it should be understood that thermoplastic lenses are usually molded in pairs. An empty cavity 42 is shown on the left, a cavity 44 with a coating drop applied thereon in the middle, and a coated cavity 46 in cross-section on the right. A screw-jack 46c, or similar height adjusting device supports a lens-forming insert 46a flush with a receiver 46b. Circulating channels 48 may be located within receiver 46b, or nearby in the mold block, which have a temperature control fluid circulated therethrough by a thermolator. A screw injector is also heated to melt the resin and deliver it to the cavities via a runner 50, there being a runner provided for each cavity. In the case of polycarbonate, the screw injector may have a heating range of 260°C to 315.6°C (500 to 600 degrees F). The thermolator may heat receiver 46b to a range of 93.3°C to 148.9°C (200 to 300 degrees F). Similar temperature control lines may be located within movable mold half 40b.

A process controller is coupled to clamping unit 40c, resin injector, thermolator and other components to coordinate the molding of lenses as is known in the art. According to an embodiment of the invention we further provide a coating applicator 60 which is coupled to the controller. More specifically, coating applicator 60 is mounted adjacent the mold halves for pivoting, sliding or other reciprocating motion to position an applicator head 60a and a spreader 70 sequentially over the mold cavities.

In FIG. 2, applicator head 60a started by applying an unpressurized coating drop into cavity 46. It then moved to the left to apply coating to cavities 44 and then 42. A spreader arm 70 is then positioned over the drop. A vertical controller 70a may be operated via hydraulic or pneumatic or electrical signals to move a bladder 70b into position. The bladder can be made from silicone rubber, polyurethane, elastomers, or other heat resistant materials. The key features of the bladder are sufficient durometer, heat resistance and surface smoothness. The bladder may be inflated and lowered, or lowered and inflated, or some combination of actions. Bladder 70b exactly conforms to the insert surface and is held in that position, pressing the coating against the heated insert. After about 2 minutes, the bladder can be safely withdrawn, leaving a pre-cured coating 46d on the insert. Resin can then be injected on top of the coating. It should be understood, that one coating applicator and one spreader arm may be provided for each cavity.

According to the second cliché embodiment, the method may be summarized according to the following steps:
i. deposit coating on to a cliché of which the etched depth is ranged from 10 µm to 50 µm. the cliché is firstly positioned on the parting surface of the lower mold half. The centre of the etched area of the cliché is aligned with the centre of concave heated mold insert to be coated.
ii. A pneumatically driven air-inflated silicone membrane moves downward from position 1 to pick up the coating from cliché and move backward to position 1. The centre of the air-inflated silicone membrane is aligned with the centre of the etched area of the cliché as well as the centre of the concave metal insert
iii. metal cliché is then retracted from the parting surface of the mold
iv. air-inflated silicone membrane with coating on it moves downward from position 1 to press against the exposed metal insert which was previously beneath the cliché. The air-pressure that inflates the membrane is hold for 2 to 5 minutes to let the coating thermally cure.
v. After that, the silicone membrane is retracted and a thin solid layer of coating is formed on the hot metal insert surface and won't be flushed by the subsequently injected thermoplastic melt..
vi. The mold closes and the regular lens injection molding cycle is actuated.
vii. At the end of the cycle, the mold opens and the coated lens is ejected out of the mold.

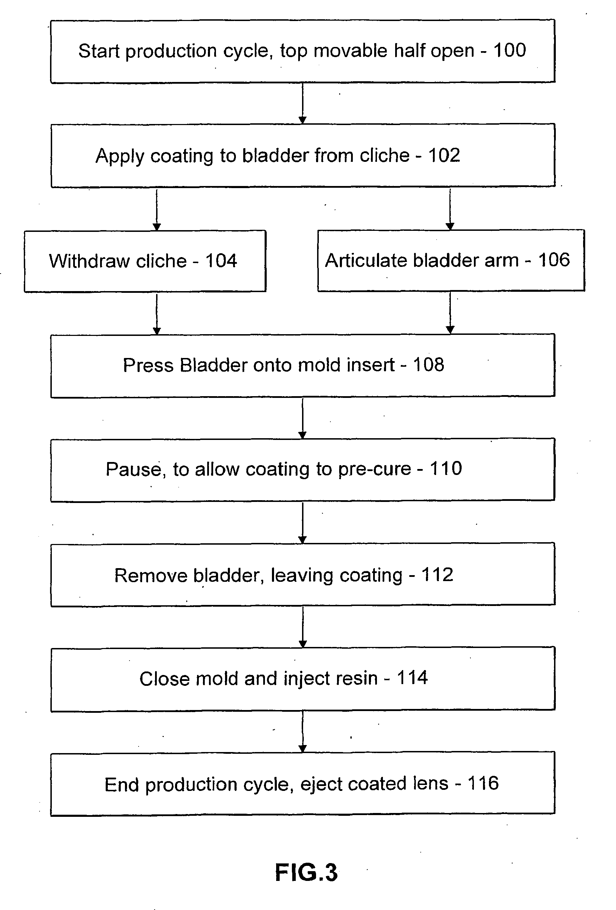

As can be seen in FIG. 3, we start the production cycle by opening the top movable half of the mold in step 100. A cliché containing the coating solution is brought into position. The cliché may be transported collectively with the bladder arm, or separately. The bladder is advanced into the cliché to pickup the coating solution in step 102 and then retracted.

In step 104 the cliché is withdrawn to reveal the mold cavity directly underneath. The bladder can then repeat its downward advancement directly onto the mold insert. According to this embodiment, we align the center points of the mold insert, the cliché and the bladder. This can be accomplished in a single alignment step.

As an alternative to step 104, the bladder arm is articulated away from the cliché in step 106. The bladder carrying the coating solution can then be pressed onto the mold insert. According to step 106, the mold insert may be oriented at any angle since the coating is able to be carried in a thin layer via the bladder. In this step 106, the bladder may require a first alignment step to properly orient it with respect to the cliché, followed by a second alignment step to properly orient it with respect to the mold insert, Alignment will be discussed in greater detail below.

After either step 104 or 106, the bladder is placed into contact with the heated mold insert, per step 108. A characteristic of the coating solution used herein, is that it will remain stable and liquid at room temperature. It will have a viscosity and flowability adjusted to complement the wetability of the bladder material, for example, silicone. The coating should adhere to the bladder in an even layer without running or dripping.

Once the bladder is pressed against the heated insert, we employ a pause step 110, to allow the coating to pre-cure. During the pre-cure the coating will begin to set and take on some characteristics of a solid. The bladder can be withdrawn, or deflated, or some combination of both to allow the bladder to peel off the coating, without disturbing the coatings setup onto the mold insert surface. Per step 112, the bladder and cliché are removed from the mold. For all embodiments, the bladder may be inflated to a pressure within the range of 0.34 bar to 1.38 bar (5 psi to 20 psi). For example, the bladder may be inflated to a pressure within the range of 0.55 bar to 0.69 bar (8 psi to 10 psi).

Having achieved the necessary clearance, the mold is closed and the resin is injected in step 114 via an edge gate. The edge gate may be modified to insure the resin in injected in a manner to minimize disturbing the coating. For example, it is imperative that the resin should not be injected underneath the coating. The resin is injected at very high pressure, in the order of thousands of 0.07 bar (thousands of pounds per square inch), thus having the effect of compressing downward on to the coating. As a result, the coating becomes intimately bonded to the resin as it sets into a final cured state. The molten resin may enter the cavity at above 260°C (500 degrees F).

In step 116, the resin begins to cool to the mold solidification temperature T. During this phase, a packing pressure may be utilized for a span of time. Once the lens is sufficiently rigid to resist deformation, the mold is opened and the in-mold coated lens is ejected.

### Industrial Manufacturing Installation

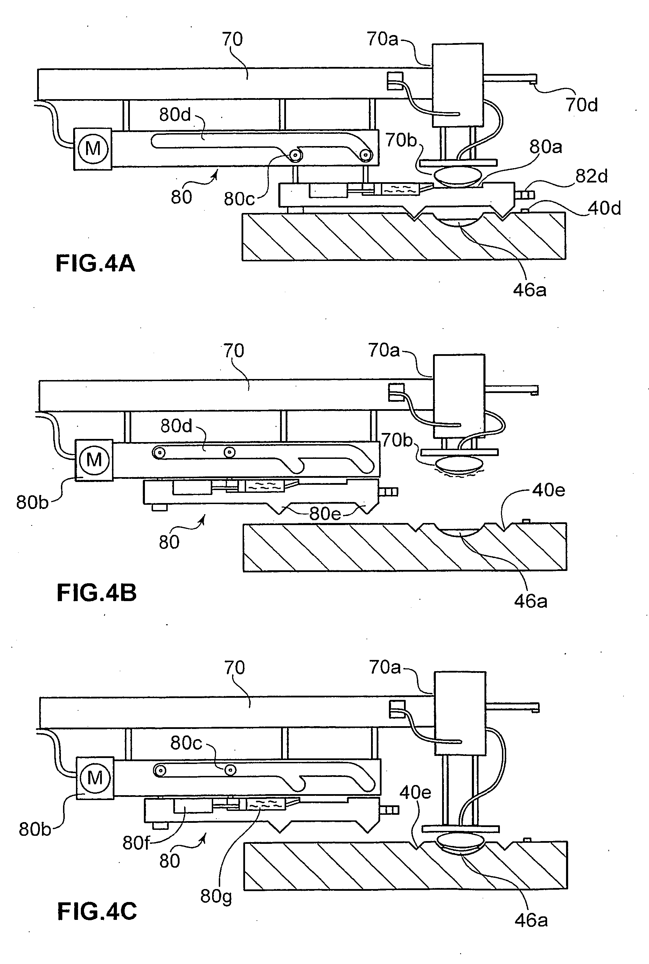

FIGS. 4A, 4B and 4C are a series of schematic diagrams showing an embodiment of the equipment configuration according to the flowchart from FIG. 3. The spreader arm 70, vertical controller 70a and bladder 70b are similar to those shown in FIG. 2. Spreader arm 70 carries a sliding tray 80, and is adapted for reciprocating motion into the open mold. Tray 80 includes a cliché 80a and alignment feet 80e. In the extended position of tray 80, shown in FIG. 4A, bladder 70b, cliché 80a and mold insert 46a should all have their center points aligned. One method is to provide alignment grooves 40e on the mold face. As tray 80 is extended, feet 80e become self-aligning as they slip into grooves 40e. Feet 80 a may be made of a suitable rubber that is soft enough to prevent scratching of the mold components, but rigid enough to properly align the tray. Feet 80e may be configured as conical shaped members self-aligningly fitting into correspondingly shaped conical recesses.

Bladder 70b is then dropped into cliché 80a via vertical controller 70a. As can be seen in FIG. 4B, bladder 70b is vertically lifted while carrying the thin layer of coating. A motor 80b is activated by the system controller to withdraw the tray. One technique would be to provide the tray with cams 80c that ride and pivot within a groove 80d to pull the tray up and away from insert 46a. Motor 80b could be provided with a belt drive or screw drive, that moves tray 80 much like the raising and lowering of an overhead garage door. In addition, tray 80 includes a tank 80g that contains additional coating solution. Solution can be metered from tank 80g into cliché 80a as needed, for example by a piston driving a cylinder unit 80f.

As can be seen in FIG. 4C, once tray 80 is withdrawn, bladder 70b can be lowered onto insert 46a via vertical controller 70a. The bladder holds its position for about 2 minutes until the coating pre-cures. The bladder is carefully raised, or deflated. Spreader arm 70 is then completely withdrawn from the mold, so the mold can close and continue with an injection and packing phase.

An alternate alignment system can be most readily seen in FIG. 4A. A registration mark 40d is provided on the mold surface. Though illustrated as a raised feature, it may be just a mark, for example, a black and white bulls eye. A reticle 82d is provided on the end of tray 80, which may be a clear window provided with crosshairs. An optical sensor 70d is provided on the end of arm 70. The system controller may receive signals from sensor 70d with the capability to jog arm 70 and tray 80 until it receives confirmation that the crosshairs are aligned with the bulls eye.

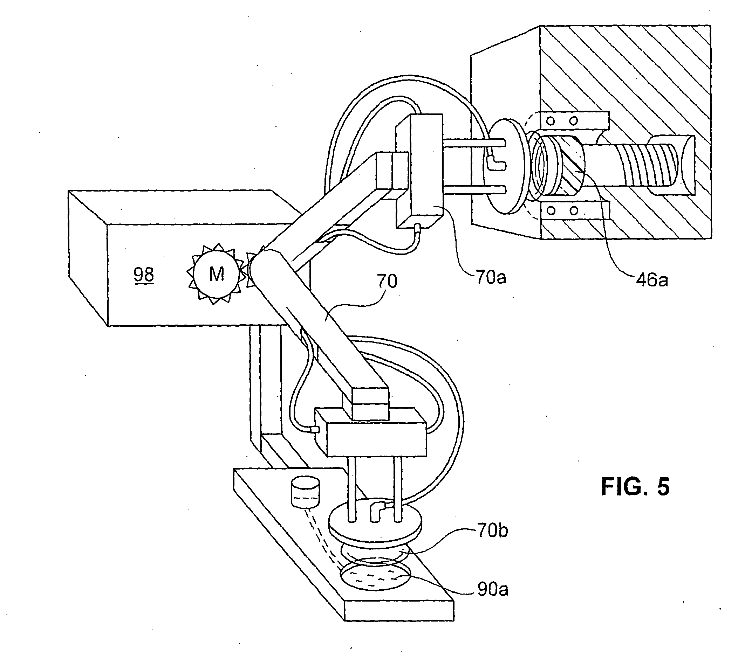

An alternate coating system can be seen in FIG. 5. Bladder 70b picks up coating solution from a cliché 90a, which is not aligned with an underlying mold insert. The bladder support arm and cliché tray are supported on a common beam 98. In this instance the mold insert is vertically oriented. Arm 70 is then pivoted via a stepper motor mounted on beam 98, or otherwise translated, into the molding machine in front of the mold insert. Controller 70a is now a horizontal controller that extends bladder 70b into contact with the heated mold insert. The bladder remains in contact therewith for about 2 minutes until the coating completes a precure phase. Arm 70 is withdrawn and the injection cycle continues. While we have shown and described the bladder as travelling along linear paths, it is possible to have the bladder follow more complex paths. For example, a robotic arm can be programmed to move the bladder along any path from the cliché to the heated mold insert.

It should be understood, that one arm and cliché may be provided for each mold cavity. For molding 2-pair, 3-pair or more pairs of lenses simultaneously, the arm/tray assembly may be reproduced to provide one assembly per mold cavity. The assemblies may be supported on a single beam that is extended into the mold for 4, 6 or more coating operations to occur simultaneously. The beam may have a square, rectangular, diamond or other polygonal shape to closely match the layout of the various mold cavities. The beam may have a spider shape with a single source of coating solution at the central head point, with feeder lines extending out each of the legs to replenish the clichés as needed.

The substrate that could be used in this method could be any injection moldable lens material like polymethyl(meth)acrylate (PMMA), polycarbonate, polycarbonate/polyester blends, polyamide, polyester, cyclic olefin copolymers and polyurethane, polysulfone, polystyrene, polypentane and combinations thereof. In practice, polycarbonate derivatives have worked well with the coating solution and techniques according to the invention.

The injection cycle is as usual and depends from the nature of the thermoplastic. Usually the mold temperature is comprised from 115.6°C to 143.3°C (240°F to 290°F), the melt temperature is comprised from 282.2°C to 315.6°C (540°F to 600°F), the packing pressure is comprised from 344.73 bar to 1034.21 bar (5,000 psi to 15,000 psi), the packing time is comprised from 10 sec to 50 sec, and the cooling time is comprised from 60 sec to 265 sec.

### EXAMPLE 1

A metal plate which has a circular recess about 50µm deep was positioned horizontally on the parting surface of the mold. An amount of liquid coating, 0.5ml, was deposited onto the circular recess, so-called cliché.

An air-inflated silicone membrane, driven by a pneumatic cylinder, moved downward to pick up the coating from the cliché and then moved back. After the cliché was removed from the mold parting surface, silicone membrane then moved downward again to press against the heated mold insert and held there to let the coating pre-cure for 2 minutes. After that, silicone membrane was removed and a partially cured thin layer of coating was transferred to the metal insert. No coating residual was taken away by the membrane.

The mold was closed for the PC lens molding. PC lens molding conditions are the same as the regular PC molding conditions and consisted of mold temperature set at 121.1°C (250°F), melt temperature ranging from 279.4°C to 296.1°C (535 degrees F to 565 degrees F), packing pressure set at 424.03 bar (6,150 psi) for 12 seconds and cooling down for 60 seconds. Coating was further cured by the heat from the hot PC melt. At the end of the molding cycle, the mold opened and the coated lens, which is optically clear, was ejected out of the mold.

Following is the coating composition that was used in the example.

| **COMPONENT** | **CONCENTRATION (%)** |
|---|---|
| Ebecryl 5129 | 50.0 |
| Ebecryl 284N | 26.0 |
| Hydroxy propylmethacrylate | 15.28 |
| Isobornyl Acrylate | 7.6 |
| t-butyl perbenzoate | 1.0 |
| Cobalt Naphthenate | 0.1 |
| Surfactant EFK 3034 | 0.02 |

A coating according to the present invention advantageously provides and/or includes at least the following characteristics:
- the coating is solvent free; in fact no volatile organic compounds (VOCs) should be generated during the in-mold coating process, which could perturb the polymerization parameters and thus the optical property of the lens;
- the coating is cured at a thermoplastic substrate high molding temperature while maintaining its optical clarity without etching the thermoplastic substrate;
- the coating can flow across the front surface of the lens before it gels and fast cures thereafter; the kinetic parameters are important to improve flow characteristics;
- the coating, advantageously, will impart desirable functional properties onto an ophthalmic lens such as, tintability, scratch resistance, etc.

A coating according to the present invention is thermally curable, optically clear, does not show visible interference fringes after coating onto a lens and comprises an optically transparent coating that is compatible with the lens material in order to adhere to it without causing any undesirable effects while imparting the desired features (tint, scratch resistance, etc.) onto the lens material.

A coating composition according to the present invention is preferably solvent less and includes an acrylate compound. The acrylate compound is preferably thermally cured, which means the coating may be cured via, e.g., azo, peroxides, and/or blocked tertiary amine. Chemically speaking, the coating composition preferably includes multi-fiznctional acrylates comprising up to hexa functional groups and with various molecular weights. Preferably, the present invention comprises a multi-functional urethane acrylic coating that is modified to meet various competing requirements. For example, such coating needs to stay in liquid form to flow along a hot mold insert to an even thickness and then polymerize rather quickly, since the lens molding process is being extended by the coating set time. Indeed, a coating used in the present invention advantageously remains in liquid form to flow along a heated mold insert to a uniform thickness and then polymerizes quickly.

More particularly, a coating composition according to the present invention preferably comprises acrylates including monofunctional acrylates and/or monofunctional methacrylates such as isobornyl acrylate and hydroxylpropyl methacrylate, as well as tetrafunctional acrylates and/or tetrafunctional methacrylates and hexafunctional acrylates and/or hexafunctional methacrylates. Exemplary acrylates that may be used in the present invention may include and are not limited to reactive multifunctional acrylates, preferably hexafunctional aliphatic urethane acrylates. For example, exemplary acrylates used in the present invention may include hexafunctional acrylates and at least one difunctional acrylate. As noted herein, the term "(meth) acrylate" refers to either the corresponding acrylate or methacrylate.

Acrylates may be obtained from UCB Chemicals or from Sartomer and Henkel (a German Co.), and may in one embodiment comprise, e.g., Ebecryl™ brand acrylates. A brief general description of various Ebecryl acrylates in EB number formats which may be used according to the present invention is as follows:
1) 284: aliphatic urethane diacrylate diluted 12% with HDOHA. Excellent light fastness, exterior durability, toughness and good flexibility.
2) 1290: hexafunctional aliphatic urethane acrylate containing an acrylated polyol diluent. Provides fast cure with excellent hardness, solvent and abrasion resistance.
3) 5129: hexafunctional aliphatic urethane acrylate combining good scratch resistance with improved flexibility
4) 8301: hexafunctional aliphatic urethane acrylate containing an acrylated polyol diluent.

Use of hydroxylpropyl methacrylate presents a particular interest to slow down the reaction in the coating composition. Multi-functional acrylates of three functional groups or higher advantageously will provide more cross linking and result in higher abrasion resistance. For example, hexa-functional acrylates will provide a high degree of cross linking due to having six (6) functional groups. The urethane backbone of these high functional acrylates provides flexibility and greater ability to resist heat. Difunctional acrylate species are used to increase the flexibility and toughness and to control the viscosity of the formulation for process-ability to a certain extent.

A monofunctional methacrylate, such as hydroxylpropyl methacrylate, serves as a monofunctional diluent and kinetic modifier. It is used to terminate the reaction or to slow down the propagation of polymerization so that it will have some stability and a window of reactivity for processing. Monofunctional methacrylates used in a composition according to the present invention serve as reactive diluents and kinetic modifiers to improve flow characteristics.

With regards to the term, acrylates, it is to be noted that methacrylates and other unsaturated compounds, whether mono- or multifunctional may also be used in addition to, or instead of, acrylates. In some cases methacrylates may experience a slower chemical reaction during polymerization. Acrylate or methacrylate compounds may be selected from the family of aliphatic urethane acrylates which include, e.g., from two to about six functional groups.

In a preferred embodiment of the present invention, high molecular weight acrylates (for example, acrylates having a molecular weight of at least 1000 centipoises (cps) or higher at 25°C) are preferably used for ophthalmic injection molding according to the present invention. This embodiment presents the advantage of improved control of the viscosity and flow of the coating composition on a heated surface. For example, a high injection pressure requires a high viscosity flow to allow for the higher temperature (i.e., higher than room temperature) during applied extrusion. It is to be noted that the viscosity may further be adjusted as necessary based on the particular injection molding parameters and requirements.

In one embodiment of the present invention, the coating compositions preferably comprises an acrylic base cured with an initiator (e.g., t-butyl perbenzoate, t-amyt perbenzoate). In fact, the thermal cure process of the present invention utilizes free radical polymerization. The initiator (t-butyl perbenzoate, t-amyl perbenzoate) thermally decomposes to generate free radicals (that is, the free radical reaction is generated by thermal heating). Those free radicals then attack monomers or oligomers (reactive multifunctional acrylates to propagate the reaction to form long molecular chains and eventually a crosslinked network.

An in-mold coating composition according to the present invention preferably may further include at least one catalyst and/or initiator, and at least one metal salt. The initiator may be selected from, e.g., alkyl aralkyl peracide, azo derivatives and blocked tertiary amine, is preferably selected from ketone peroxides, diacyl peroxides, dialkylperoxides, diperoxyketals and peroxyesters, and in a very preferred embodiment comprises tert-butylperbenzoate, and tert-amyl perbenzoate.

The examples disclosed herein preferably use peroxides derived from alkyl aralkyl peracide with a metal salt promoter. Peroxides are used to cure the coating via a free radical reaction. Metal salt promoters help to generate free radicals quickly and minimize oxygen inhibition. The metal salt and peroxide concentration are preferably chosen to fit a curing cycle for the current process. The concentration ratio can be varied as necessary to fit a particular process requirement. Again, although use of peroxides for curing is a preferred method, and more specifically tert-butyl perbenzoate and tert-amyl perbenzoate is a preferred candidate, alternative methods for curing may include use of azo and blocked tertiary amine.

The metal salt is preferentially selected from cobalt naphthenate, cobalt octoate, cobalt neodecanoate, copper naphthenate, zinc naphthenate, and potassium octoate, and preferably, the metal salt comprises cobalt naphthenate.

In one embodiment, an exemplary coating composition according to the present invention comprises the following: (a) at least one hexafunctional acrylate and/or hexafunctional methacrylate compound; (b) at least one difunctional acrylate and/or a difunctional methacrylate compound; (c) Hydroxyl propylmethacrylate; (d) Isobornyl acrylate; (e) T-butyl perbenzoate; and (f) Cobalt naphthenate.

An in-mold coating composition according the invention may optionally further include a surfactant which is preferably selected from a fluorinated surfactant or a silicone surfactant. That is, a surfactant such as a fluorinated surfactant (e.g., EFKA 3034) or a silicone surfactant (e.g., Silwet L-7602) may be included in a coating composition according to the present invention. The surfactant in the coating composition may be added to improve wetability of the mold surface.

The coating composition may also optionally include acrylic or epoxy functionalized colloids, for example, OG-101 or OG-103 (available from Clariant), or functionalized colloidal silica with acrylic silanes, or other colloids such as, e.g., cerium colloid, niobium colloid, and antimony colloid.

An in-mold coating composition according to the present invention may further optionally include, e.g., a metal alkoxide which may be selected, for example, from zirconium isopropoxydes, methyl trimethoxysilane and tetraethoxysilane.

A coating composition according to the present invention may further optionally include at least one dichroic dye, a photochromic dye and/or one liquid crystal.

It is to be understood by one of ordinary skill in the art that the coating should preferably retain its qualities at the lens substrate molding temperature, e.g., for a polycarbonate substrate, such temperature is around 121.1°C (250°F).

Upon coating of an optical lens, a coating according to the present invention is optically clear and may have a thickness ranging from about 1 micron to about 100 microns. For example, typical abrasion resistance coating thickness ranges from about 1. micron to about 8 microns, and a photochromic system can be up to about 20 microns or more.

Advantageously, an in-mold coating composition according to the present invention provides very good anti-abrasion properties. To further increase abrasion resistance, it is also possible to include in the coating formulation according to the present invention acrylic or epoxy functionalized colloids, as discussed above. Metal alkoxides and its derivatives may also optionally be added as discussed above to increase refractive index, abrasion resistance and perhaps influence the rate of polymerization.

According to one embodiment, a coating composition according to the present invention comprises the following:

| | | |
|---|---|---|
| Hexafunctional aliphatic urethane acrylate | range: about 33% to 52% | preferred: 50% |
| | | |
| Aliphatic urethane diacrylate diluted 12% with HDOHA | range: about 13% to 31% | preferred: 25% |
| | | |
| Isobornyl acrylate | range: about 6% to 9% | preferred: 7.6% |
| | | |
| Hydroxylpropyl methacrylate | range: about 12% to 18% | preferred: 16% |
| | | |
| Tetrabutylperoxybenzoate | range: about 0.5% to 2% | preferred: 1% |
| | | |
| Metal complex (e.g., cobalt naphthenate) | range: about 0.25 to 1% | preferred: 0.4% |

### EXAMPLE 2

A liquid coating drop, 0.5ml was deposited in the center of the concave surface of a 6 base metal insert. The insert was enclosed in the bottom mold half and had been constantly heated as the rest of the mold of which the temperature was maintained at 250 degrees F. An auto dispenser or a scaled pipette was used to deposit coating.

An air-inflated silicone membrane moved downward to press the coating drop and spread it out on the insert concave surface. Coating formulations are the same as in Example 1. The silicone membrane was held at that position for 2 minutes to let the coating thermally cured by the heat from the hot insert. When the membrane was retracted, a thin layer of coating was formed on the insert surface. The mold was then closed and plastic melt was injected into cavity. Coating was further cured by the heat from the melt. Lens molding parameters are the same as those in Example 1. At end of the lens molding cycle, the optical clear coated lens was ejected out of the cavity.

In certain tests, a 2mm thick, 6 base lens was injected into a cavity having one insert stamp coated. A clamp tonnage of 150 tons was used during injection. The coating thickness was 28 µm thick.

Having described preferred embodiments for lens manufacturing, materials used therein for coatings and methods for processing same (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention as outlined by the appended claims. Having thus described the invention with the details and particularity required by the patent laws, what is claimed and desired protected is set forth in the appended claims.

## Claims

1. A method to manufacture an in-mold coated ophthalmic lens by pre-treating a heated mold insert (46a) of an open injection molding machine, comprising the steps of:
providing a cliché (80a, 90a) with a circular etched recess that contains a heat-activated thermoset acrylic-based coating solution;
dipping (102) a silicone membrane (70b) into the recess to contact the coating solution;
transporting (106) the liquid coating via the silicone membrane (70b) to a heated mold insert (46a) and pressing (108, 110) the membrane (70b) on the insert (46a) until the coating is pre-cured;
removing (112) the silicone membrane (70b) and closing the mold;
injecting (114) a thermoplastic resin into the closed mold; and
opening the mold and ejecting (116) an in-mold coated ophthalmic lens.

2. The method of claim 1, wherein the recess is etched to a depth between 10µm to 50µm.

3. The method of claim 1, wherein the diameter of the circular recess is dimensioned to dispense sufficient coating to completely cover a curved insert surface.

4. The method of claim 1, wherein the cliché (80a, 90a) contains.between 0.2 ml and 0.5 ml of coating solution.

5. The method of claim 1, wherein the silicone membrane is an inflatable bladder (70b).

6. The method of claim 5, wherein the bladder (70b) is inflated to a pressure between 0.34 bar to 1.38 bar (5 psi to 20 psi).

7. The method of claim 1, wherein in said pressing step, the pressure is maintained from a time between 1.5 minutes and 5 minutes.

8. The method of claim 1 wherein the thermoplastic substrate is selected from the group consisting of polymethyl(meth)acrylate, polycarbonate, polycarbonate/polyester blends, polyamide, polyester, cyclic olefin copolymers and polyurethane, polysulfone, polystyrene, polypentane and combinations thereof.

9. The method of claim 1, wherein the thermoplastic is a polycarbonate derivative.

10. The method of claim 1, wherein the liquid coating comprises at least a mixture of one or more (meth)acrylate compounds, an initiator, and a metal salt.

11. The method of claim 10, wherein the liquid coating comprises at least a mixture of at least one hexafunctional acrylate compound, at least one difunctional acrylate compound, and at least one monofunctional acrylate compound.

12. The method of claim 10, wherein the initiator is selected from alkyl aralkyl peracide compounds.

13. The method of claim 10, wherein the metal salt is cobalt naphthenate.

14. The method of claim 1, wherein said providing step comprises:
providing a cliché (80a) on a horizontal surface of a lower mold half at the beginning of the cycle when the movable mold half is opened vertically.

15. The method of claim 14, wherein the membrane (70b), the cliché (80a) and the mold insert (46a) all have center points, and wherein the three center points are aligned along a common vertical axis during said dipping step, and wherein said transporting step comprises transporting the membrane (70b) so that its center point remains on the vertical axis.

16. The method of claim 1, wherein said providing step comprises:
providing a horizontally oriented cliché (90a) adjacent one mold half at the beginning of the cycle when the movable mold half is opened.

17. The method of claim 16, wherein the membrane (70b), the cliché (90a) and the mold insert (46a) all have center points, and wherein the three center points are aligned along a common vertical plane during said dipping step, and wherein said transporting step comprises transporting the membrane (70b) so that its center point remains on the vertical plane.

18. The method of any of claims 15 or 17, wherein the cliché contains between 0.1 ml and 0.8 ml of liquid coating solution.

19. The method of claim 18, wherein the thermoplastic is selected from the group consisting of polymethyl(meth)acrylate, polycarbonate, polycarbonate/polyester blends, polyamide, polyester, cyclic olefin copolymers and polyurethane, polysulfone, polystyrene, polypentane and combinations thereof.

20. The method of claim 19, wherein the thermoplastic is a polycarbonate derivative.

21. The method of any of claims 15 or 17, wherein the liquid coating comprises at least a mixture of one or more (meth)acrylate compounds, an initiator, and a metal salt.

22. The method of claim 21, wherein the liquid coating comprises at least a mixture of at least one hexafunctional acrylate compound, at least one difunctional acrylate compound, and at least one monofunctional acrylate compound.

23. The method of claim 21, wherein the initiator is selected from alkyl aralkyl peracide compounds.

24. The method of claim 21, wherein the metal salt is cobalt naphthenate.

## Patentansprüche

1. Verfahren zur Herstellung einer in-Form-beschichteten ophthalmischen Linse durch Vorbehandeln eines geheizten Formeinsatzes (46a) einer offnen Spritzgussvorrichtung, umfassend die Schritte:
Bereitstellen eines Clichés (80a, 90a) mit einer kreisförmig geätzten Vertiefung die eine hitzeaktivierte warmaushärtende acrylbasierende Beschichtungslösung enthält;
Tauchen (102) einer Siliconmembran (70b) in die Vertiefung um die Beschichtungslösung zu berühren;
Transportieren (106) der flüssigen Beschichtung via der Silikonmembran (70b) zu einen geheizten Formeinsatz (46a) und Pressen (108, 110) der Membran (70b) auf den Einsatz (46a) bis die Beschichtung vorgehärtet ist;
Entfernen (112) der Silikonmembran (70b) und Schießen der Form;
Einspritzen (114) eines thermoplastischen Harzes in die geschlossene Form; und
Öffnen der Form und Auswerfen (116) einer in-Form-beschichteten ophthalmischen Linse.

2. Verfahren nach Anspruch 1, bei dem die Vertiefung auf eine Tiefe von 10 µm bis 50 µm geätzt wird.

3. Verfahren nach Anspruch 1, bei dem der Durchmesser der kreisförmigen Vertiefung darauf ausgelegt ist, ausreichend Beschichtung zu spenden, um eine gekrümmte Einsatzfläche komplett zu bedecken.

4. Verfahren nach Anspruch 1, bei dem das Cliché (80a, 90a) zwischen 0,2 ml und 0,5 ml an Beschichtungslösung enthält.

5. Verfahren nach Anspruch 1, bei dem die Silikonmembran eine aufblasbare Blase (70b) ist.

6. Verfahren nach Anspruch 5, bei dem die Blase (70b) auf einen Druck zwischen 0,34 bar bis 1,38 bar (5 psi bis 20 psi) aufgeblasen wird.

7. Verfahren nach Anspruch 1, bei dem im Pressschritt der Druck für eine Zeit zwischen 1,5 Minuten und 5 Minuten gehalten wird.

8. Verfahren nach Anspruch 1, bei dem das thermoplastische Substrat ausgewählt wird aus einer Gruppe bestehend aus Polymethyl(meth)acrylate, Polycarbonate, Polycarbonat/Polyester Mischungen, Polyamide, Polyester, Cyclo-Olefin-Copolymere und -Polyurethane, Polysulfone, Polystyrene, Polypentane und Kombinationen daraus.

9. Verfahren nach Anspruch 1, bei dem der Thermoplast ein Polycarbonatderivat ist.

10. Verfahren nach Anspruch 1, bei dem die flüssige Beschichtung zumindest eine Mischung von einem oder mehreren (Meth)acryIatverbindungen, einem Initiator, und einem Metallsalz umfasst.

11. Verfahren nach Anspruch 10, bei dem die flüssige Beschichtung zumindest eine Mischung von zumindest einer hexafunktionalen Acrylatverbindung, zumindest einer difunktionalen Acrylatverbindung, und zumindest einer monofunktionalen Acrylatverbindung umfasst.

12. Verfahren nach Anspruch 10, bei dem der Initiator aus Alkyl Aralkyl Persäureverbindungen ausgewählt wird.

13. Verfahren nach Anspruch 10, bei dem das Metallsalz Cobaltnaphthenat ist.

14. Verfahren nach Anspruch 1, bei dem der Bereitstellungsschritt umfasst:
Bereitstellen eines Clichés (80a) auf einer horizontalen Fläche einer unteren Formhälfte an Beginn des Zyklus, wenn die bewegliche Formhälfte vertikal geöffnet ist/wird.

15. Verfahren nach Anspruch 14, bei dem die Membran (70b), der Cliché (80a) und der Formeinsatz (46a) alle Zentralpunkte haben und wobei die drei Zentralpunkte entlang einer gemeinsamen Vertikalachse ausgerichtet sind während des Eintauchschrittes, und wobei der Transportschritt das Transportieren der Membran (70b) umfasst, so dass ihr Zentralpunkt auf der vertikalen Achse verbleibt.

16. Verfahren nach Anspruch 1, bei dem der Bereitstellungsschritt umfasst:
Bereistellen eines horizontal ausgerichteten Clichés (90a) angrenzend einer Formhälfte am Beginn des Zyklus wenn die bewegliche Formhälfte geöffnet ist/wird.

17. Verfahren nach Anspruch 16, bei dem die Membran (70b), das Cliché (90a) und der Formeinsatz (46a) alle Zentralpunkte haben, und wobei die drei Zentralpunkte entlang einer gemeinsamen vertikalen Ebene ausgerichtet sind, während dem Eintauchschritt und wobei der Transportschritt das Transportieren der Membran (70b) umfasst, so dass ihr Zentralpunkt in der vertikalen Ebene verbleibt.

18. Verfahren nach einem der Ansprüche 15 oder 17, bei dem das Cliché zwischen 0,1 ml und 0,8 ml an Beschichtungslösung enthält.

19. Verfahren nach Anspruch 18, bei dem der Thermoplast ausgewählt wird aus einer Gruppe bestehend aus Polymethyl(meth)acrylat, Polycarbonat, Polycarbonat/Polyester Mischungen, Polyamide, Polyester, Cyclo-Olefin-Copolymere und - Polyurethane, Polysulfone, Polystyrene, Polypentane und Kombinationen davon.

20. Verfahren nach Anspruch 19, bei dem der Thermoplast ein Polycarbonatderivat ist.

21. Verfahren nach einem der Ansprüche 15 oder 17, bei dem die flüssige Beschichtung zumindest eine Mischung von einem oder mehreren (Meth)acrylatverbindungen, einem Initiator und einem Metallsalz umfasst.

22. Verfahren nach Anspruch 21, bei dem die flüssige Beschichtung zumindest eine Mischung von zumindest einer hexafunktionalen Acrylatverbindung, zumindest einer difunktionalen Acrylatverbindung, und zumindest einer monofunktionalen Acrylatverbindung umfasst.

23. Verfahren nach Anspruch 21, bei dem der Initiator aus Alkyl Aralkyl Persäureverbindungen ausgewählt wird.

24. Verfahren nach Anspruch 21, bei dem das Metallsalz Cobaltnaphthenat ist.

## Revendications

1. Procédé de fabrication d'une lentille ophtalmique revêtue dans le moule par prétraitement d'un insert de moulage chauffé (46a) d'une machine de moulage par injection ouverte, comprenant les étapes consistant à :
fournir un cliché (80a, 90a) ayant un évidement gravé circulaire qui contient une solution de revêtement à base de résine acrylique thermodurcie activée par la chaleur ;
tremper (102) une membrane de silicone (70b) dans l'évidement pour la mettre en contact avec la solution de revêtement ;
transporter (106) le revêtement liquide par l'intermédiaire de la membrane de silicone (70b) vers un insert de moulage chauffé (46a) et presser (108, 110) la membrane (70b) sur l'insert (46a) jusqu'à ce que le revêtement soit prédurci ;
retirer (112) la membrane de silicone (70b) et fermer le moule ;
injecter (114) une résine thermoplastique dans le moule fermé ; et
ouvrir le moule et éjecter (116) une lentille ophtalmique revêtue dans le moule.

2. Procédé selon la revendication 1, dans lequel l'évidement est gravé à une profondeur comprise entre 10 µm et 50 µm.

3. Procédé selon la revendication 1, dans lequel le diamètre de l'évidement circulaire est dimensionné de façon à délivrer une quantité suffisante de revêtement pour recouvrir entièrement une surface d'insert incurvée.

4. Procédé selon la revendication 1, dans lequel le cliché (80a, 90a) contient entre 0,2 ml et 0,5 ml de solution de revêtement.

5. Procédé selon la revendication 1, dans lequel la membrane de silicone est une vessie gonflable (70b).

6. Procédé selon la revendication 5, dans lequel la vessie (70b) est gonflée à une pression comprise entre 0,34 bar et 1,38 bar (5 psi à 20 psi).

7. Procédé selon la revendication 1, dans lequel lors de ladite étape de compression, la pression est maintenue pendant un temps compris entre 1,5 minute et 6 minutes.

8. Procédé selon la revendication 1, dans lequel le substrat thermoplastique est sélectionné dans le groupe constitué d'un poly(méth)acrylate de méthyle, d'un polycarbonate, de mélanges de polycarbonate/polyester, d'un polyamide, d'un polyester, de copolymères oléfiniques cycliques et de polyuréthanne, de polysulfone, de polystyrène, de polypentane et de combinaisons de ceux-ci.

9. Procédé selon la revendication 1, dans lequel la résine thermoplastique est un dérivé de polycarbonate.

10. Procédé selon la revendication 1, dans lequel le revêtement liquide comprend au moins un mélange d'un ou plusieurs composés de (méth)acrylate, d'un agent d'amorçage et d'un sel métallique.

11. Procédé selon la revendication 10, dans lequel le revêtement liquide comprend au moins un mélange d'au moins un composé d'acrylate hexafonctionnel, d'au moins un composé d'acrylate difonctionnel et d'au moins un composé d'acrylate monofonctionnel.

12. Procédé selon la revendication 10, dans lequel l'agent d'amorçage est sélectionné parmi des composés de peracide d'alkyle-aralkyle.

13. Procédé selon la revendication 10, dans lequel le sel métallique est le naphténate de cobalt.

14. Procédé selon la revendication 1, dans lequel ladite étape de fourniture consiste à :
fournir un cliché (80a) sur une surface horizontale d'une moitié de moule inférieure au début du cycle lorsque la moitié de moule mobile est ouverte verticalement.

15. Procédé selon la revendication 14, dans lequel la membrane (70b), le cliché (80a) et l'insert de moulage (46a) ont tous des points centraux, et dans lequel les trois points centraux sont alignés le long d'un axe vertical commun pendant ladite étape de trempage, et dans lequel ladite étape de transport consiste à transporter la membrane (70b) afin que son point central reste sur l'axe vertical.

16. Procédé selon la revendication 1, dans lequel ladite étape de fourniture consiste à :
fournir un cliché orienté horizontalement (90a) de façon adjacente à une moitié de moule au début du cycle lorsque la moitié de moule mobile est ouverte.

17. Procédé selon la revendication 16, dans lequel la membrane (70b), le cliché (90a) et l'insert de moulage (46a) ont tous des points centraux, et dans lequel les trois points centraux sont alignés le long d'un plan vertical commun pendant ladite étape de trempage, et dans lequel ladite étape de transport consiste à transporter la membrane (70b) afin que son point central reste sur le plan vertical.

18. Procédé selon l'une quelconque des revendications 15 ou 17, dans lequel le cliché contient entre 0,1 ml et 0,8 ml d'une solution de revêtement liquide.

19. Procédé selon la revendication 18, dans lequel la résine thermoplastique est sélectionnée dans le groupe constitué du poly(méth)acrylate de méthyle, d'un polycarbonate, de mélanges de polycarbonate/polyester, d'un polyamide, d'un polyester, de copolymères oléfiniques cycliques et de polyuréthanne, de polysulfone, de polystyrène, de polypentane et de combinaisons de ceux-ci.

20. Procédé selon la revendication 19, dans lequel la résine thermoplastique est un dérivé de polycarbonate.

21. Procédé selon l'une quelconque des revendications 15 ou 17, dans lequel le revêtement liquide comprend au moins un mélange d'un ou plusieurs composés de (méth)acrylate, d'un agent d'amorçage et d'un sel métallique.

22. Procédé selon la revendication 21, dans lequel le revêtement liquide comprend au moins un mélange d'au moins un composé d'acrylate hexafonctionnel, d'au moins un composé d'acrylate difonctionnel et d'au moins un composé d'acrylate monofonctionnel.

23. Procédé selon la revendication 21, dans lequel l'agent d'amorçage est sélectionné parmi des composés de peracide d'alkyle-aralkyle.

24. Procédé selon la revendication 21, dans lequel le sel métallique est le naphténate de cobalt.
